# EUROPEAN PATENT SPECIFICATION

(11) **EP 2 400 394 B1**
(45) Date of publication and mention of the grant of the patent: **05.06.2013**
(21) Application number: 11170689.1
(22) Date of filing: 21.06.2011
(51) Int. Cl.: G06F 11/14, H04N 1/00, G03G 15/00

(54) **Information processing apparatus including storage unit and connection unit for connecting external storage device**
Informationsverarbeitungsvorrichtung mit Speichereinheit und Verbindungseinheit zum Anschließen einer externen Speichervorrichtung
Appareil de traitement d'informations incluant une unité de stockage et unité de connexion pour connecter un dispositif de stockage externe

(30) Priority: 22.06.2010 JP 2010141213
(43) Date of publication of application: 28.12.2011
(73) Proprietor: CANON KABUSHIKI KAISHA, Ohta-ku Tokyo 146-8501 (JP)
(72) Inventor: Yamamizu, Hiroshi, Ohta-ku, Tokyo (JP)
(74) Representative: Garner, Jonathan Charles Stapleton

(56) References cited:
- US-A1- 2007 076 256
- US-A1- 2008 253 573
- US-A1- 2009 128 851
- US-A1- 2009 144 758

## Description

### BACKGROUND OF THE INVENTION

### Field of the Invention

The present invention relates to an information processing apparatus including a storage unit and a connection unit for connecting an external storage device.

### Description of the Related Art

In recent years, an image forming apparatus such as a digital multifunction peripheral is provided with a large capacity storage device and has a file server function that enables the image forming apparatus to be used in the same manner as a file server. By the file server function, a user can store data into an internal storage device included in the image forming apparatus. Since the image forming apparatus has such a file server function, it is important to back up user data in the image forming apparatus.

Further, in recent years, as memory media such as a universal serial bus (USB) memory and a secure digital (SD) memory have become widely used, image forming apparatuses having interfaces to such memory media and capable of connecting various memory media have increased. In such an image forming apparatus, a user can connect a memory medium to the image forming apparatus, and store image data to the memory medium or print data stored in the memory medium.

For example, it is possible to connect a memory medium storing image information such as a photograph to an interface of the image forming apparatus and directly print the image information from the memory medium (direct print/Memory To Print).

Also, it is possible to connect a memory medium to an interface of the image forming apparatus and directly store image read by a scanner of the image forming apparatus into the memory medium (direct scan/Scan To Memory).

When performing backup of an internal storage device included in the image forming apparatus having such a direct print function or direct scan function, it can be considered to connect a backup external storage device via a universal interface (I/F) such as USB. In this case, it can be considered that the external storage device desired to be used for backup is used by the direct print or the direct scan.

According to Japanese Patent Application Laid-Open No. 2009-70022, a configuration is employed in which a connection of an I/F (interface) of an internal hard disk drive (HDD) included in the image forming apparatus is changed to the backup device and thereby the internal HDD can be backed up.

As described above, if the backup external storage device is connected to the image forming apparatus that can print from a USB memory or store scan data into a USB memory, the external storage device can be accessed from a user despite the fact that the external storage device is desired to be used. for backup. For example, the external storage device connected for backup may be used by the direct print or the direct scan, so that there may be an issue in the backup processing, such as, overwriting backup data.

US 2008/0253573 discloses a back-up system for an MFP. The back-up system comprises the MFP, a back-up apparatus, and a PC. When the back-up apparatus is connected to the MFP, the MFP displays a screen asking the user whether the back-up apparatus is to be used to make a back-up or to restore a back-up. If the back-up option is selected, a back-up is performed. During the back-up certain functions of the MFP are disabled.

### SUMMARY OF THE INVENTION

The present invention is directed to a method for preventing processing other than the backup processing from accessing the external storage device connected for backup and preventing an issue to the backup processing from occurring.

According to a first aspect of the present invention, there is provided an image forming apparatus as specified in claims 1 to 10. According to a second aspect of the present invention, there is provided a method as specified in claim 11. According to a third aspect of the present invention, there is provided a program as specified in claim 12. According to a fourth aspect of the present invention, there is provided a computer-readable storage medium as specified in claim 13.

According to embodiments of the present invention, it is possible to prevent processing other than the backup processing from accessing the external storage device connected for backup and prevent an issue to the backup processing from occurring.

Further features and aspects of the present invention will become apparent from the following detailed description of embodiments with reference to the attached drawings.

### BRIEF DESCRIPTION OF THE DRAWINGS

The accompanying drawings, which are incorporated in and constitute a part of the specification, illustrate embodiments, features, and aspects of the invention and, together with the description, serve to explain the principles of the invention.

Fig. 1 is a block diagram illustrating an internal configuration of an image forming apparatus according to a first embodiment of the present invention.

Fig. 2 is a diagram illustrating an external view of the image forming apparatus.

Fig. 3 is a block diagram illustrating a hardware configuration of a control device of the image forming apparatus.

Fig. 4 is a diagram illustrating a software module configuration according to the first embodiment of the present invention.

Fig. 5 is a diagram illustrating an initial operation screen of an operation unit.

Fig. 6 is a diagram illustrating a transmission initial screen displayed when a send tab is pressed on the initial operation screen.

Figs. 7A and 7B are diagrams illustrating a transmission screen displayed when a "store in medium" key is pressed on the transmission initial screen.

Fig. 8 is a flowchart illustrating an example of an operation for connecting a backup external HDD and performing a backup of data in an internal HDD to the external HDD according to the first embodiment of the present invention.

Fig. 9 is a flowchart illustrating an example of an operation of a user interface (UI) section when the "store in medium" key is pressed on the transmission initial screen of Fig. 6 or a box screen not illustrated in the drawings in the first embodiment of the present invention.

Figs. 10A and 10B are flowcharts illustrating an example of an operation for connecting a backup external HDD and performing a backup of data in an internal HDD to the external HDD according to a second embodiment of the present invention.

Fig. 11 is a flowchart illustrating an example of an operation of a UI section when the "store in medium" key is pressed on the transmission initial screen of Fig. 6 or a box screen not illustrated in the drawings in the second embodiment of the present invention.

### DESCRIPTION OF THE EMBODIMENTS

Various embodiments, features, and aspects of the invention will be described in detail below with reference to the drawings.

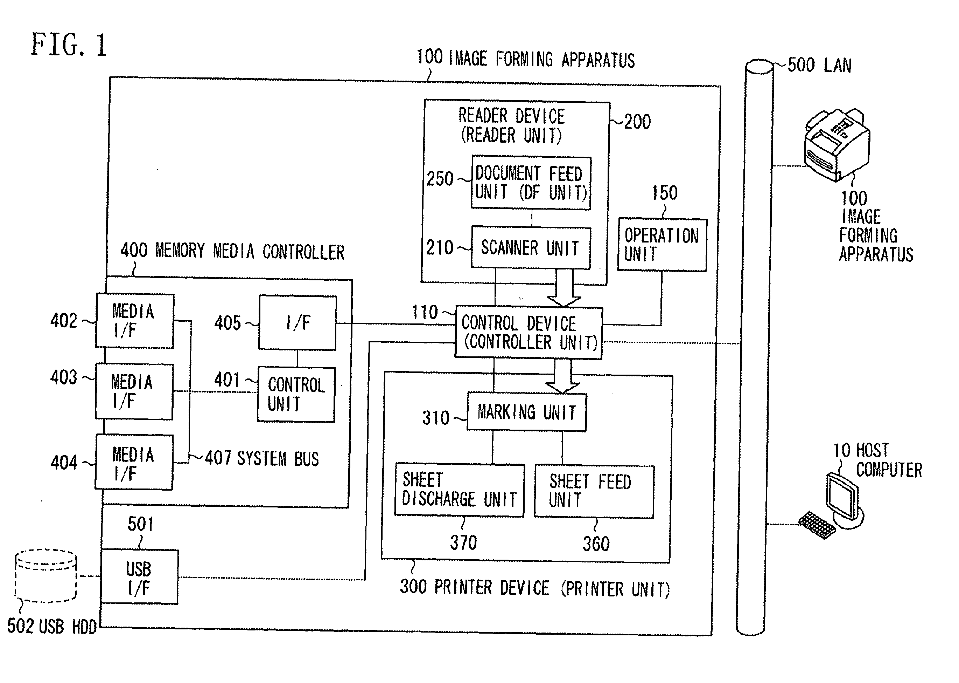

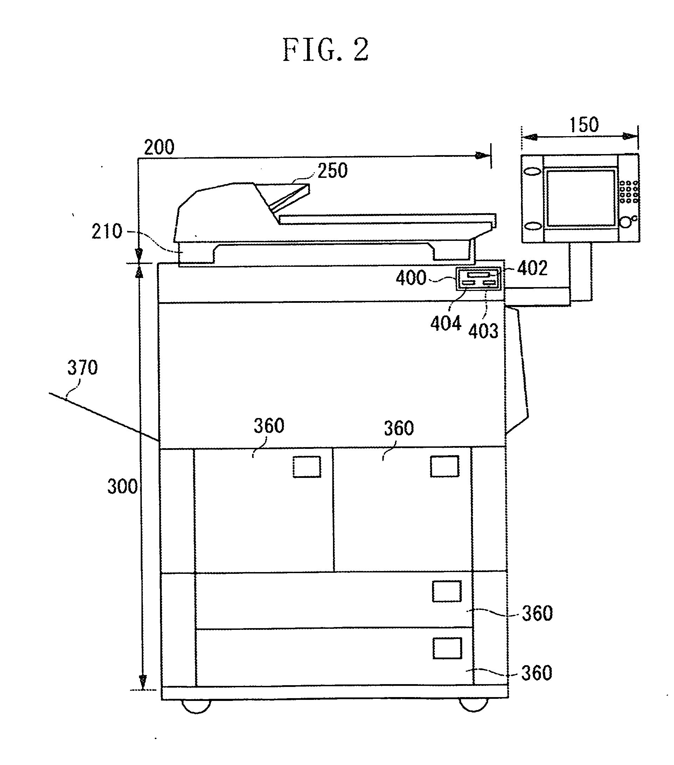

Fig. 1 is a block diagram illustrating an internal configuration of an image forming apparatus to which an information processing apparatus according to a first embodiment of the present invention can be applied. Fig. 2 is a diagram illustrating an external view of the image forming apparatus. The same reference numerals are given to the same components in Figs. 1 and 2.

The image forming apparatus 100 provides various basic image processing functions such as printer, image input, document filing, document transmission/reception, and image conversion.

In the image forming apparatus 100, a reader unit (image input device) 200 is a reading unit that optically reads a document image and converts it into image data. The reader unit 200 includes a scanner unit 210 having a function of scanning a document, and a document feed unit 250 having a function of transporting a document sheet.

A printer unit (image output device) 300 transports a recording sheet (print medium), prints image data on the recording sheet as a visible image, and discharges the recording sheet to the outside of the device. The printer unit 300 includes a sheet feed unit 360 having a plurality of types of recording sheet cassettes, a marking unit 310 having a function of transferring and fixing image data onto a recording sheet, and a sheet discharge unit 370 having a function of sorting printed recording sheets, stapling them, and outputting them to the outside of the device.

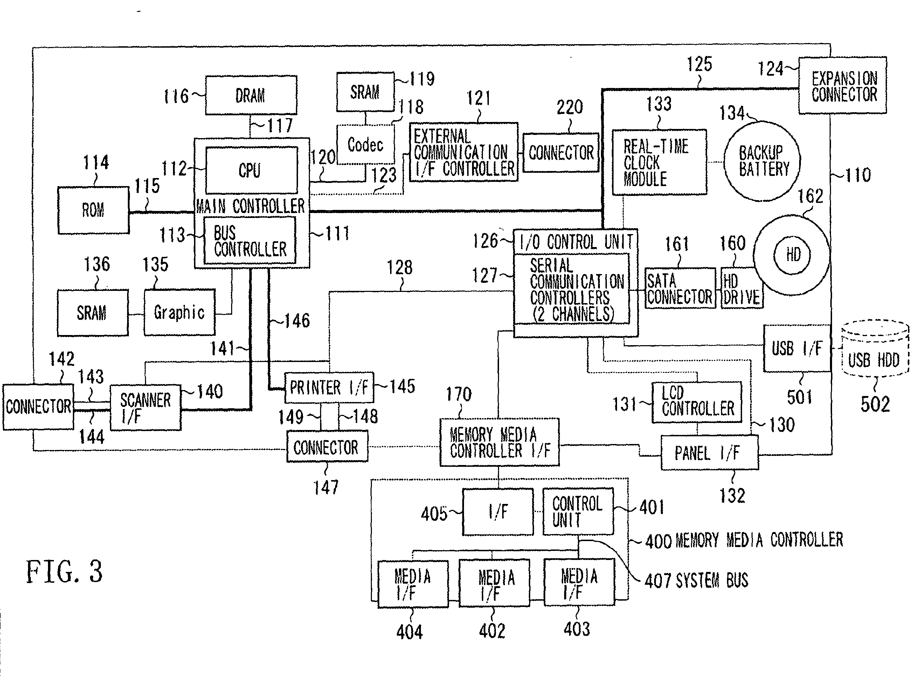

A control device 110 is electrically connected to the reader unit 200 and the printer unit 300, and further connected to a local area network (LAN) 500. The control device 110 provides a copy function by controlling the reader unit 200 to read image data of a document and controlling the printer unit 300 to output the image data on a recording sheet. The control device 110 also provides a scanner function for converting image data read from the reader unit 200 into code data and transmitting the code data to a host computer 10 via the LAN 500. The control device 110 further provides a printer function for converting code data received from a host computer via the LAN 500 into image data and outputting the image data to the printer unit 300. As illustrated in Fig. 3 described below, the control device 110 has a hard disk (internal HDD 162) inside thereof.

An operation unit 150 is connected to the control device 110, has a liquid crystal touch panel, and provides a user interface (UI) for operating an image input/output system.

A memory media controller 400 has an I/F unit 405 and is connected to the control device 110 via the I/F unit 405. The memory media controller 400 has a control unit 401 and controls communication with the control device 110 and various memory media by the control unit 401.

The control unit 401 is connected to media I/Fs 402, 403, and 404 via a system bus 407. The media I/Fs 402, 403, and 404 are I/Fs for inserting various memory media such as an SD memory card, a Compact Flash (registered trademark), a memory stick, an xD-Picture Card (trademark), and smart media. It is possible to connect these media to any one of the media I/Fs 402, 403, and 404 and perform direct print, direct scan, and BOX TO MEMORY.

In the case of direct print, image data and document data stored in a memory medium are transferred to the printer device 300 via the control unit 401 and the controller unit 110 and printed. In the case of direct scan, image data read by the scanner unit 210 is stored in a memory medium via the controller unit 110 and the control unit 401. In the case of BOX TO MEMORY, image data stored in the internal HDD 162 (Fig. 3) described below is obtained by the control device 110 and stored in a memory medium.

A USB I/F 501 is a connection unit for connecting an external storage device. A USB HDD 502 used as an external storage device is connected to the control device 110 via a USB I/F 501 and can be used to obtain a backup of data in an internal HDD included in the control device 110. A memory medium connected via the USB I/F 501 can be used for the above-described direct print, direct scan, and BOX TO MEMORY.

Although not illustrated in the drawings, the reader unit 200 includes a plurality of charge-coupled devices (CCDs) in the scanner unit 210. If the sensitivities of the CCDs are different from each other, even when the densities of pixels on a document are the same, the read pixels are recognized to have different densities. Therefore, to correct the differences, first, the reader unit 200 performs exposure scanning on a white plate (uniformly white plate), converts the amount of reflected light obtained by performing the exposure scanning into an electrical signal, and outputs the electrical signal to the control device 110.

Next, the operation when the reader unit 200 scans an image on a document will be described. The reader unit 200 converts information of the image into electrical signals by inputting reflected light obtained by exposure-scanning the image on the document into the CCDs. Further, the reader unit 200 converts the electrical signals into luminance signals of R, G, and B colors, and outputs the luminance signals as image data to the control device 110.

Documents are set in a tray of the document feed unit 250. When a user instructs start of reading from the operation unit 150, a document read instruction is issued from the control device 110 to the reader unit 200. When the reader unit 200 receives the instruction, the reader unit 200 performs a document read operation by feeding the documents one by one from the tray of the document feed unit 250. The document read method may be a method in which the document is placed on a glass surface not illustrated in the drawings and scanned by moving an exposure unit, instead of an automatic feeding method by the document feed unit 250.

The printer unit 300 is an image forming device which forms image data received from the control device 110 on a sheet of paper. In the present embodiment, an electrophotographic method using a photosensitive drum or a photosensitive belt is used as an image forming method; however, the present invention is not limited to this. For example, the present invention is also applicable to an ink-jet method in which ink is discharged from a micro nozzle array to perform printing on a sheet of paper.

The printer unit 300 is provided with a plurality of sheet feed units 360 which enable selection of different sheet sizes or sheet orientations. The sheet of paper printed in the printer unit 300 is discharged to a sheet discharge unit 370.

The memory media controller 400 has memory media I/Fs 402, 403, and 404, and can be easily accessed from a user. The user can insert a memory medium into a memory media I/F 402, 403, or 404, and instruct the memory medium to perform processing from the operation unit 150. The user can also connect a memory medium to the USB I/F 501 and instruct the memory medium to perform processing from the operation unit 150. When the user instructs start of processing of the above-described direct print, direct scan, and BOX TO MEMORY from the operation unit 150, the user can store data to a selected memory medium and print image data from a memory medium.

Fig. 3 is a block diagram illustrating a hardware configuration of the control device 110 of the image forming apparatus 100. In Fig. 3, the same reference numerals are given to the same components as those in Figs. 1 and 2.

In the control device 110, a main controller 111 mainly includes a central processing unit (CPU) 112, a bus controller 113, and various I/F controller circuits.

The CPU 112 and the bus controller 113 control the operation of the entire control unit 110. The CPU 112 operates based on a program read from a read-only memory (ROM) 114 via a ROM I/F 115. An operation in which the CPU 112 interprets Page Description Language (PDL) code data received from the host computer and converts the PDL code data into raster image data is also described in this program, and this operation is processed by software. In short, the CPU 112 operates based on the program read from the ROM 114 and performs the operation for converting the PDL code data received from the host computer into raster image data.

A bus controller 113 controls transfer of data input and output from and to each I/F, and performs arbitration of bus contention and control of direct memory access (DMA) data transfer.

A DRAM (dynamic random access memory) 116 is connected to the main controller 111 by a DRAM I/F 117, and used as a work area for the operation of the CPU 112 and an area for accumulating image data.

A codec 118 compresses raster image data accumulated in the DRAM 116 by a method such as modified huffman (MH), modified relative element address designate (MR), modified modified READ (MMR), Joint Bi-level Image experts Group (JBIG), or Joint Photographic Experts Group (JPEG), and conversely decompresses accumulated code data into raster image data. A static random access memory (SRAM) 119 is used as a temporary work area of the codec 118. The codec 118 is connected to the main controller 111 via an I/F 120. The bus controller 113 controls data transfer between the codec 118 and the DRAM 116 to DMA-transfer the data.

A graphic processor 135 performs processing such as image rotation, scaling, and color space conversion. An SRAM 136 is used as a temporary work area of the graphic processor 135.

An external communication I/F controller 121 is connected to the main controller 111 via an I/F 123, and connected to an external network via a connector 122.

An extension connector 124 for connecting an extension board and an input/output (I/O) control unit 126 are connected to a general-purpose high-speed bus 125. A general example of the general-purpose high-speed bus 125 is a Peripheral Components Interconnect (PCI) bus.

The I/O control unit 126 is provided with two channels of asynchronous serial communication controllers 127 for transmitting and receiving control commands to and from each CPU of the reader unit 200 and the printer unit 300. The asynchronous serial communication controllers 127 are connected to external I/F circuits (140, 145) via the I/O bus 128.

A panel I/F 132 is connected to an LCD controller 131, and includes an I/F for displaying information on the liquid crystal screen of the operation unit 150 and a key input I/F 130 for key-inputting from hard keys and touch panel keys.

The operation unit 150 has a liquid crystal display unit, a touch panel input device attached to the liquid crystal display unit, and a plurality of hardware keys. A signal input by a touch panel or a hardware key is transmitted to the CPU 112 via the aforementioned panel I/F 132. The liquid crystal display unit of the operation unit 150 displays image data transmitted from the panel I/F 132. The liquid crystal display unit displays functions in the operations of the image processing apparatus, image data, and the like.

A real-time clock module 133 updates and stores a date and time managed inside the apparatus, and is backed up by a backup battery 134.

A serial ATA (SATA) connector 161 is used to connect an external storage device. In the present embodiment, the hard disk drive 160 (HD drive) is connected via the SATA connector 161, and image data is stored in the hard disk (internal HDD) 162 or image data is read from the hard disk 162.

Connectors 142 and 147 are respectively connected to the reader unit 200 and the printer unit 300, and respectively include asynchronous serial I/Fs (143, 148) and video I/Fs (144, 149) .

A scanner I/F 140 is connected to the reader unit 200 via the connector 142 and also connected to the main controller 111 via a scanner bus 141. The scanner I/F 140 has a function of applying predetermined processing to an image received from the reader unit 200. Further, the scanner I/F 140 has a function of outputting a control signal generated based on a video control signal transmitted from the reader unit 200 to the scanner bus 141. Data transfer from the scanner bus 141 to the DRAM 116 is controlled by the bus controller 113.

A printer I/F 145 is connected to the printer unit 300 via the connector 147 and also connected to the main controller 111 via a printer bus 146. The printer I/F 145 has a function of applying predetermined processing to image data output from the main controller 111, and outputting the processed image data to the printer unit 300. Further, the printer I/F 145 has a function of outputting a control signal generated based on a video control signal transmitted from the printer unit 300 to the printer bus 146.

Transfer of raster image data rasterized on the DRAM 116 to the printer unit 300 is controlled by the bus controller 113. That is, the raster image data is DMA-transferred to the printer unit 300 via the printer bus 146 and video I/F 149.

As described above, the memory media controller 400 has the media I/Fs 402 to 404 and the control unit 401 that controls the media I/Fs 402 to 404. The control unit 401 is connected to the I/O control unit 126 via an I/F unit 405 and a media I/F 170 of the controller unit 110.

The USB HDD 502 is connected via the I/O control unit 126 and the USB I/F 501 and can be used to obtain a backup of data in an internal HDD included in the control device 110. In the backup operation, data stored in the internal HDD 162 connected to the I/O control unit 126 is copied to the backup USB HDD 502 via the USB I/F 501. The data copy is performed according to an instruction received from a user. In the present embodiment, processing in which data copy is performed when an instruction to perform data copy is received as described above is described as an example of backup processing. However, as another example of the backup processing, a method may be used in which, periodically or each time an access to the HDD occurs, the backup processing is performed if a backup mode is set by a user in the image forming apparatus 100.

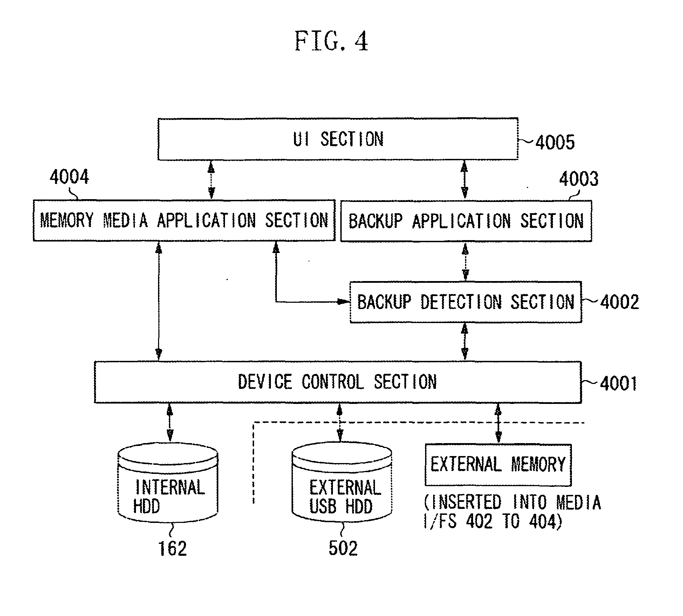

Fig. 4 is a diagram illustrating a software module configuration according to the first embodiment of the present invention.

In Fig. 4, software modules 4001 to 4005 of the image forming apparatus 100 are realized when the CPU 112 of the main controller 111 executes a program read from the ROM 114. Hereinafter, each module will be described.

A device control section 4001 controls the storage device connected to the image forming apparatus 100 and monitors the I/F to which the storage device is connected. The device control section 4001 detects whether the storage device is connected. The device control section 4001 communicates with a memory media application section 4004 and a backup detection section 4002 and transfers information indicating that the storage device is connected to the image forming apparatus 100 to the memory media application section 4004 and the backup detection section 4002.

The backup detection section 4002 receives a notification indicating whether an instruction to perform backup to the external USB HDD 502 is received from a user from a backup application section 4003. If backup will be performed, the backup detection section 4002 notifies the memory media application section 4004 that the backup will be performed.

When a user instructs the UI section 4005 to perform backup processing, the backup application section 4003 detects that the user instructs the UI section 4005 to perform backup processing and notifies the backup detection section 4002 of that accordingly. When the backup application section 4003 is instructed to perform backup processing, the backup application section 4003 instructs the external USB HDD 502 to make a copy of the data in the internal HDD 162.

The memory media application section 4004 controls memory devices (external memories inserted into the media I/Fs 402 to 404) detected to be connected by the device control section 4001 and further controls the external USB HDD. When the memory media application section 4004 receives a notification of backup from the backup detection section 4002, the memory media application section 4004 notifies the UI section so that a user cannot access the USB HDD.

The UI section 4005 provides an interface to a user and determines whether the user accesses the interface. Further, the UI section 4005 communicates with each application for an instruction from the user.

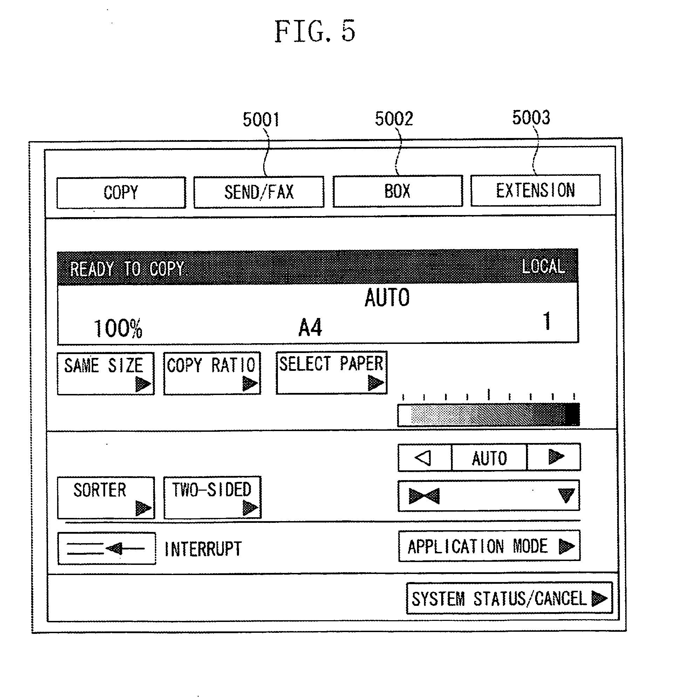

Here, screen control of the operation unit 150 performed by the UI section 4005 will be described with reference to Figs. 5, 6, 7A, and 7B.

Fig. 5 is a diagram illustrating an initial operation screen of the operation unit 150.

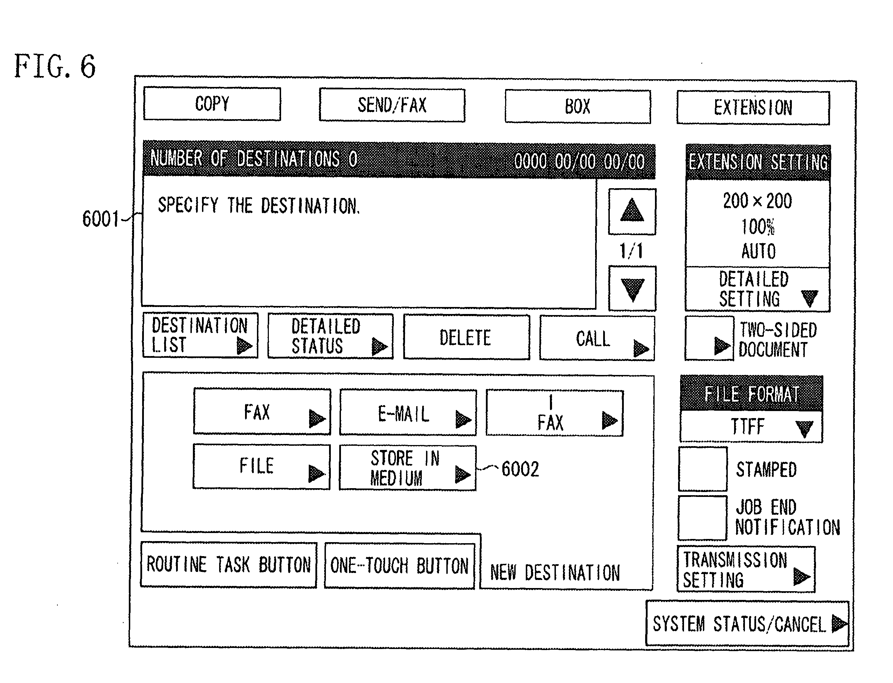

In Fig. 5, a send tab 5001 is pressed when scanning a document. When the send tab 5001 is pressed, the UI section 4005 displays a transmission initial screen illustrated in Fig. 6 on the operation unit 150.

Fig. 6 is a diagram illustrating the transmission initial screen displayed when the send tab 5001 is pressed on the initial operation screen of Fig 5.

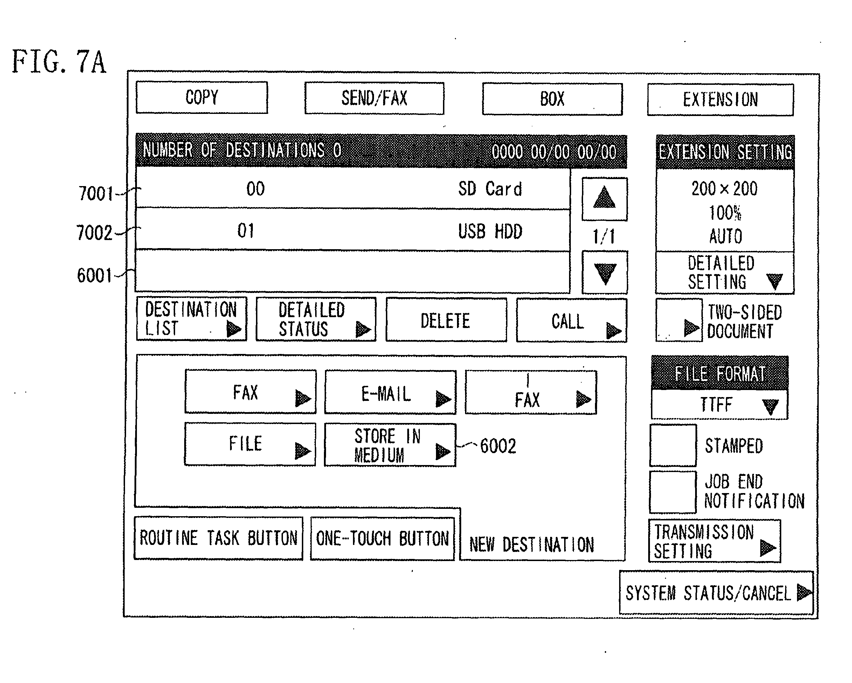

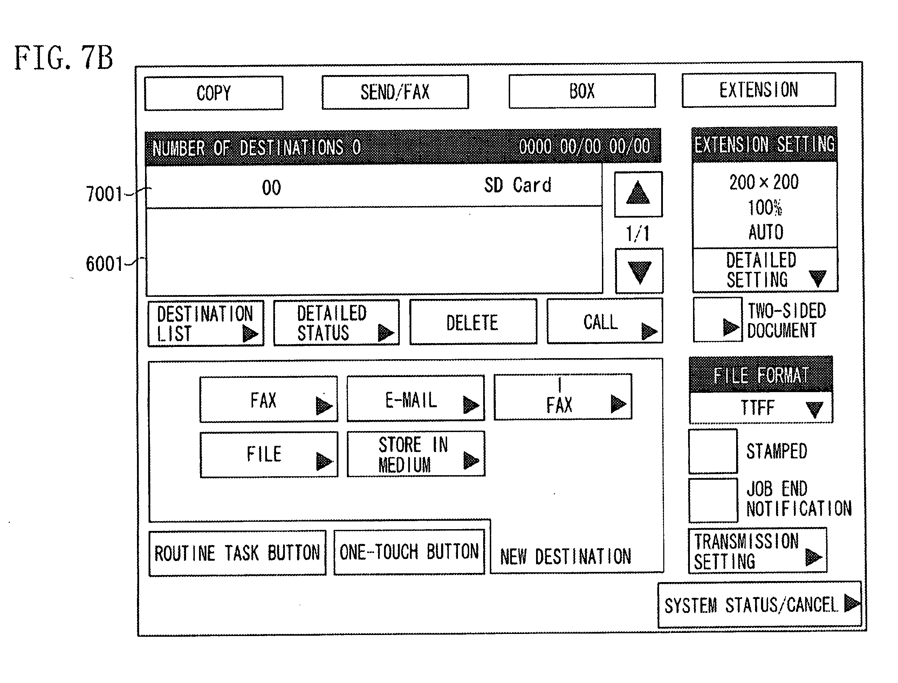

When performing the aforementioned direct scan, a memory medium is selected as the transmission destination. When a "store in medium" key 6002 is pressed, as illustrated in Fig. 7, the UI section 4005 displays the connected external storage devices such as display items 7001 and 7002 (for example, external USB HDD 502 and external memories inserted into the media I/Fs 402 to 404) as options in a destination display box 6001 and enables them to be selected as the destination.

Figs. 7A and 7B are diagrams illustrating a transmission screen displayed when the "store in medium" key 6002 is pressed on the transmission initial screen of Fig. 6.

In the transmission screen illustrated in Figs. 7A and 7B, in a state in which one of memory medium is selected as the destination in the destination display box 6001, if a start key not illustrated in the drawings in the operation unit 150 is pressed, the main controller 111 starts a direct scan operation.

The operation of the BOX TO MEMORY is the same as that described above. When performing the BOX TO MEMORY, first, a user presses a box tab 5002 in the initial operation screen in Fig. 5. When the box tab 5002 is pressed, the UI section 4005 displays a box screen not illustrated in the drawings on the operation unit 150. In the same manner as in the transmission initial screen illustrated in Fig. 6, the box screen includes the "store in medium" key. When performing the BOX TO MEMORY, the user presses the "store in medium" key in the box screen. When the "store in medium" key is pressed, in the same manner as in the destination display box 6001 illustrated in Figs. 7A and 7B, the UI section 4005 displays options for selecting a connected external storage device (for example, external USB HDD 502 and external memories inserted into the media I/Fs 402 to 404) as a data copy destination.

The operation of the direct print is also the same as that described above. When performing the direct print, the user presses an extension tab 5003 in the initial operation screen in Fig. 5. When the extension tab 5003 is pressed, the UI section 4005 displays an extension screen not illustrated in the drawings on the operation unit 150. In the same manner as in the transmission initial screen illustrated in Fig. 6, the extension screen includes the "store in medium" key. When performing the direct print, the user presses the "store in medium" key in the extension screen. When the "store in medium" key is pressed, in the same manner as in the destination display box 6001 illustrated in Figs. 7A and 7B, the UI section 4005 displays options for selecting a connected external storage device (for example, external USB HDD 502 and external memories inserted into the media I/Fs 402 to 404) as a data acquisition source.

In the present embodiment, it is possible to set access setting ("access permission setting" or "access denial setting") for the access of a user to the external USB HDD 502 from the memory media application section 4004 to the UI section 4005. Hereinafter, the access permission setting and the access denial setting will be described. Here, it is assumed that the external USB HDD 502 is connected to the USB I/F 501.

First, a case will be described in which the "store in medium" key 6002 is pressed when the "access permission setting" to the external USB HDD 502 from a user is set. In this case, as illustrated in Fig. 7A, the UI section 4005 displays "USB HDD" as an option indicated by reference numeral 7002 in the destination display box 6001 and enables the external USB HDD 502 to be selected as the destination (data storage destination).

Next, a case will be described in which the "store in medium" key 6002 is pressed when the "access denial setting" to the external USB HDD 502 from a user is set. In this case, as illustrated in Fig. 7B, the UI section 4005 does not display "USB HDD" as an option in the destination display box 6001 and disables the external USB HDD 502 to be selected as the destination (data storage destination).

Although the case of the direct scan is described here, the case of the BOX TO MEMORY is the same. When performing the BOX TO MEMORY, if the "access permission setting" is set, as illustrated in Fig. 7A, the UI section 4005 displays "USB HDD" as an option and enables the external USB HDD 502 to be selected as the data storage destination. On the other hand, if the "access denial setting" is set, as illustrated in Fig. 7B, the UI section 4005 does not display "USB HDD" as an option and disables the external USB HDD 502 to be selected as the data storage destination.

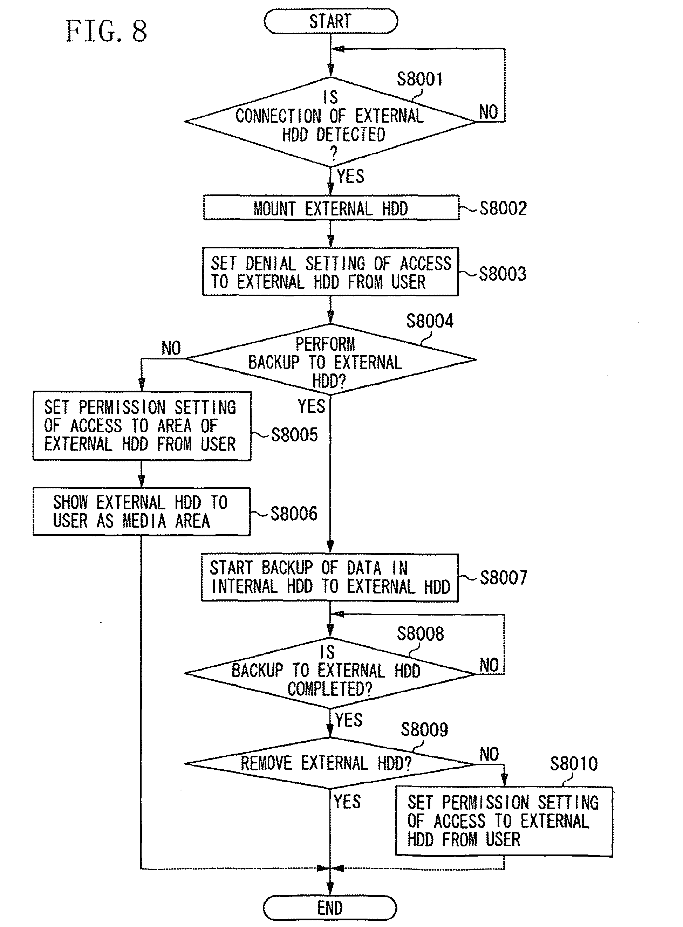

Hereinafter, the backup operation of data in the internal HDD to the external USB HDD according to the first embodiment of the present invention will be described with reference to Fig. 8.

Fig. 8 is a flowchart illustrating an example of an operation for connecting a backup external USB HDD and performing the backup operation of data in the internal HDD to the external USB HDD according to the first embodiment of the present invention. Steps S8001 to S8010 are realized by the CPU 112 of the main controller 111 executing a program read from the ROM 114.

First, in step S8001, the device control section 4001 monitors a connection of the USB HDD 502 (hereinafter referred to as external HDD) to the USB I/F 501. If the device control section 4001 detects the connection of the external HDD (YES in step S8001), the device control section 4001 notifies the memory media application section 4004 and the backup detection section 4002 that the connection of the external HDD is detected. The backup detection section 4002 transfers the notification to the backup application section 4003.

In step S8002, the memory media application section 4004 mounts the USB HDD 502 detected in step S8001.

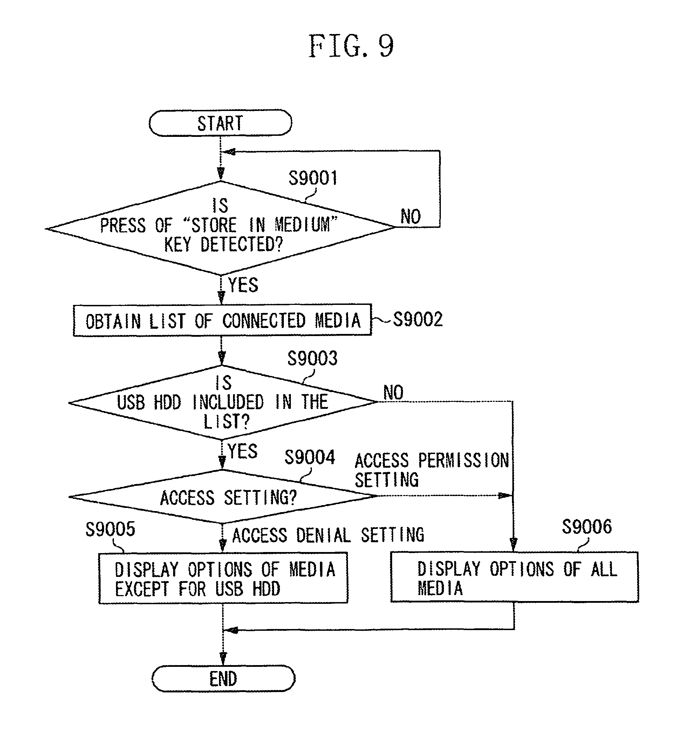

In step S8003, the memory media application section 4004 sets a setting (access denial setting) to disable access to the external HDD mounted in step S8002 from a user to the UI section 4005. When the "access denial setting" is set, the UI section 4005 defines the external HDD mounted in step S8002 as a media area which is not shown to the user, and performs such control that the external HDD cannot be accessed from the user. For example, even when the "store in medium" key is pressed on the transmission initial screen of Fig. 6 or the box screen not illustrated in the drawings, as illustrated in Fig. 7B, the UI section 4005 performs such control that the external HDD is not displayed as a destination (not shown to the user). Thereby, the user cannot select the external HDD as the destination (data storage destination) of the direct scan or the like, so that access from the user is impossible. The operation of the UI section 4005 will be described in Fig. 9 below.

The backup application section 4003, which receives the detection notification of the external HDD described above, instructs the UI section 4005 to display a screen for receiving an instruction whether to perform backup to the external HDD (first selection). Based on this instruction, the UI section 4005 displays a screen for receiving an instruction whether to perform backup to the external HDD from the user on the operation unit 150. In step S8004, the backup application section 4003 monitors the user instruction from the screen and determines whether the instruction (selection) to perform backup is input.

If the backup application section 4003 determines that the instruction (selection) not to perform backup is input (NO in step S8004), the backup application section 4003 notifies the backup detection section 4002 accordingly. The backup detection section 4002 notifies the memory media application section 4004 that backup is not performed.

When receiving this notification, the memory media application section 4004 sets a setting (access permission setting) to enable access to the external HDD from a user to the UI section 4005 in step S8005.

In step S8006, by the access permission setting in step S8005, the UI section 4005 shows the external HDD detected in step S8001 to the user as a media area and performs such control that the external HDD can be accessed from the user. For example, when the "store in medium" key is pressed on the transmission initial screen of Fig. 6 or the box screen not illustrated in the drawings, as illustrated in Fig. 7A, the UI section 4005 performs such control that the external HDD ("USB HDD" 7002) is displayed as a destination (shown to user). Thereby, the user can select the external HDD as the destination (data storage destination) of the direct scan or the like, so that the external HDD can be accessed from the user. The operation of the UI section 4005 will be described in Fig. 9 below.

When the processing of step S8006 is completed, the CPU 112 of the main controller 111 ends the processing of this flowchart.

On the other hand, if the backup application section 4003 determines that the instruction (selection) to perform backup is input (YES in step S8004), the backup application section 4003 notifies the backup detection section 4002 that backup is performed. The backup detection section 4002 notifies the memory media application section 4004 that backup is performed.

Next, in step S8007, the backup application section 4003 starts backup of data in the internal HDD 162 to the external HDD set as a backup HDD in step S8004.

In step S8008, the backup application section 4003 determines whether the backup started in step S8007 is completed. When the backup is completed (YES in step S8008), the backup application section 4003 notifies the backup detection section 4002 that the backup is completed. The backup detection section 4002 notifies the memory media application section 4004 that the backup is completed.

When receiving the notification, the memory media application section 4004 instructs the UI section 4005 to display a screen for receiving a user instruction (second selection) whether to remove the external HDD after the backup is completed and use the external HDD for other uses other than backup (the external HDD is not a backup HDD anymore). Based on this instruction, the UI section 4005 displays a screen for receiving a user instruction whether to remove the external HDD after the backup is completed to remove the external HDD and use the external HDD for other uses other than backup (the external HDD is not a backup HDD anymore) on the operation unit 150. In step S8009, the memory media application section 4004 monitors the user instruction (user selection) from the screen, and determines whether to remove the external HDD.

In step S8009, if the memory media application section 4004 determines to remove the external USB HDD 502 (YES in step S8009), the CPU 112 of the main controller 111 ends the processing of this flowchart while maintaining the state of access denial.

On the other hand, in step S8009, if the memory media application section 4004 determines not to remove the external HDD and use the external HDD for other uses other than backup (it is instructed (selected) that the external HDD is not a backup HDD anymore) (NO in step S8009), the memory media application section 4004 advances the process to step S8010. Even if it is determined not to remove the external HDD, the access denial setting may be maintained. By maintaining the access denial setting, the external HDD can be used only for backup. In other words, it is possible to prevent a user from selecting the external HDD as the destination (data storage destination) of the direct scan or the like despite the fact that the external HDD is used as a backup HDD.

In step S8010, the memory media application section 4004 sets a setting (access permission setting) to enable access to the external HDD from a user to the UI section 4005. Based on this access permission setting, the UI section 4005 shows the external HDD to the user as a media area and performs such control that the external HDD can be accessed from the user. For example, when the "store in medium" key is pressed on the transmission initial screen of Fig. 6 or the box screen not illustrated in the drawings, as illustrated in Fig. 7A, the UI section 4005 performs such control that the external HDD ("USB HDD" 7002) is displayed as a destination (data storage destination) (shown to user). Thereby, the user can select the external HDD as the destination of the direct scan or the like, so that the external HDD can be accessed from the user. The operation of the UI section 4005 will be described in Fig. 9 below.

When the processing of step S8010 is completed, the CPU 112 of the main controller 111 ends the processing of this flowchart.

Hereinafter, the operation of the UI section 4005 when the "store in medium" key is pressed on the transmission initial screen of Fig. 6 or the box screen not illustrated in the drawings in the first embodiment of the present invention will be described with reference to Fig. 9.

Fig. 9 is a flowchart illustrating an example of the operation of the UI section 4005 when the "store in medium" key is pressed on the transmission initial screen of Fig. 6 or the box screen not illustrated in the drawings in the first embodiment of the present invention. Steps S9001 to S9006 are realized by the CPU 112 of the main controller 111 executing a program read from the ROM 114.

First, in step S9001, the UI section 4005 monitors pressing of the "store in medium" key on the transmission initial screen of Fig. 6 or the box screen not illustrated in the drawings. When detecting the pressing of the "store in medium" key (YES in step S9001), the UI section 4005 obtains a list of connected media from the memory media application section 4004 in step S9002. When a new medium is connected, the device control section 4001 notifies the memory media application section 4004 accordingly. Based on this notification, the memory media application section 4004 creates a list of connected media and holds the list in a memory (DRAM 116).

Next, in step S9003, the UI section 4005 determines whether an external HDD is included in the list of connected media.

In step S9003, if the UI section 4005 determines that an external HDD is included (YES in step S9003), then in step S9004, the UI section 4005 determines the access setting to the external HDD.

In step S9004, if the UI section 4005 determines that the access setting to the external HDD is the "access denial setting", the UI section 4005 advances the process to step S9005. In step S9005, the UI section 4005 displays options of media obtained from the list of connected media from which the external HDD is removed, and performs such control that the external HDD cannot be accessed as a data storage destination. Then, the UI section 4005 ends the processing of this flowchart.

On the other hand, in step S9004, if the UI section 4005 determines that the access setting to the external HDD is the "access permission setting", the UI section 4005 advances the process to step S9006. In step S9006, the UI section 4005 displays options of all media included in the list of connected media, and performs such control that the media including the external HDD can be accessed as a data storage destination. Then, the UI section 4005 ends the processing of this flowchart.

In step S9003, if the UI section 4005 determines that no external HDD is included in the list (NO in step S9003), then in step S9006, the UI section 4005 displays options of all media included in the list of connected media. Then, the UI section 4005 ends the processing of this flowchart.

Based on the above processing, it is possible to realize a configuration in which, when the "access permission setting" is set, a user can provide an instruction to perform storage processing of scan data or box data to the external HDD used as the storage destination, and when the "access denial setting" is set, a user cannot provide an instruction to perform storage processing of scan data or box data to the external HDD used as the storage destination.

Specifically, when the "access permission setting" is set, a screen for inputting an instruction to access the external HDD by processing different from the backup processing is displayed on the user interface, and control is performed to receive an instruction to access the external HDD by processing different from the backup processing from the user interface. On the other hand, when the "access denial setting" is set, a screen for inputting an instruction to access the external HDD by processing different from the backup processing is not displayed on the user interface, and control is performed not to receive an instruction to access the external HDD by processing different from the backup processing from the user interface.

Therefore, when the external HDD is connected, it is possible to prevent a user from accessing the external HDD until an instruction indicating that the external HDD is not a backup HDD is issued from the user. Thereby, while data backup processing is being performed to the external HDD connected to back up data in the internal HDD, it is possible to prevent the user from accessing the connected external HDD. When the user issues an instruction indicating that the external HDD is not a backup HDD, the user can access the external HDD. Therefore, an issue during the backup processing, such as, backup data recorded on the external HDD by the backup processing is overwritten by the user, can be prevented from occurring.

In the present embodiment, a configuration is described in which, if the access setting is the "access denial setting" when performing backup processing to the external HDD, the main controller 111 denies access to the USB HDD when the direct scan or the BOX TO MEMORY is performed. However, a configuration may be employed in which, if the access setting is the "access denial setting" when performing backup processing to the external HDD, the main controller 111 performs control to deny access to the external HDD from any processing other than the backup processing. In this case, when performing the backup processing, control is performed such that access from the direct print using the external HDD and the processing for storing data transmitted from the host computer 10 into the external HDD are also denied. In this case, the main controller 111 performs such control that the external HDD is not shown to external devices that can communicate with the controller 111 via a network.

The accesses that are denied when the "access denial setting" is set may be only accesses including writing to the external HDD, and accesses for reading data from the external HDD may be permitted.

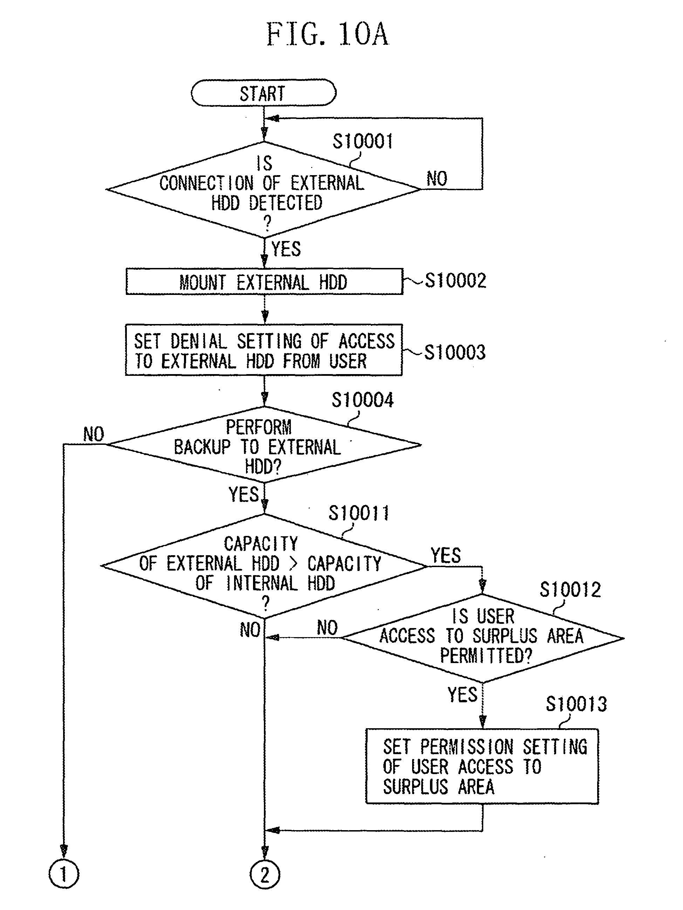

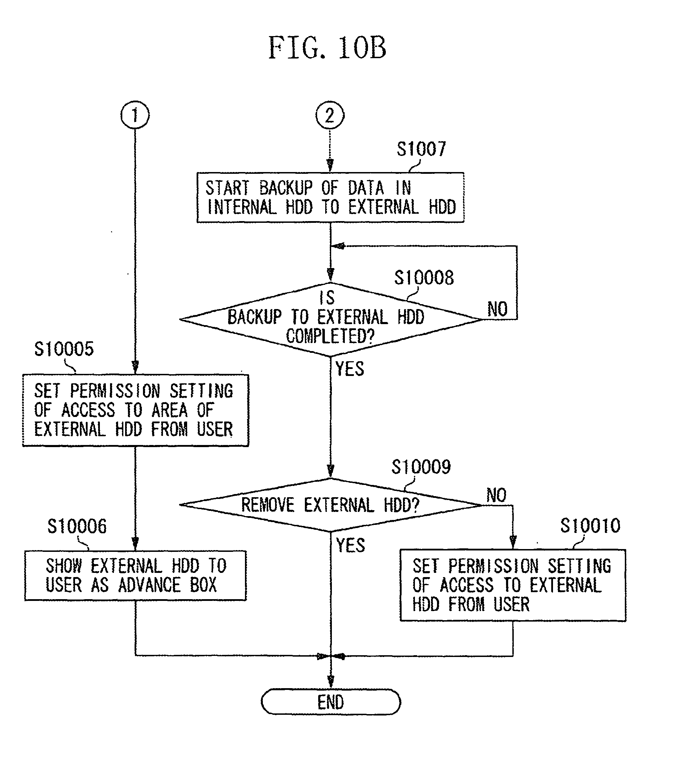

Hereinafter, a backup operation of data in the internal HDD to the external HDD in a second embodiment of the present invention will be described with reference to Figs. 10A and 10B.

Figs. 10A and 10B are flowcharts illustrating an example of an operation for connecting the backup external HDD and performing a backup of data in the internal HDD to the external HDD according to the second embodiment of the present invention. Steps S10001 to S10013 are realized by the CPU 112 of the main controller 111 executing a program read from the ROM 114.

Steps S10001 to S10004 are the same as steps S8001 to S8004 in Fig. 8, so that the description thereof will not be repeated.

If an instruction to perform backup is input (YES in step S10004), then in step S10011, the backup application section 4003 compares the capacities of the internal HDD 162 and the external HDD.

In step S10011, if the backup application section 4003 determines that the capacity of the external HDD is larger than that of the internal HDD 162 (YES in step S10011), the backup application section 4003 advances the process to step S10012.

In step S10012, the backup application section 4003 determines whether the user can access a surplus area that is not used for backup (an area other than the backup area that is used for backup) in the external HDD. First, the backup application section 4003 instructs the UI section 4004 to display a screen for requesting an instruction (third selection) whether to permit the user to access the surplus area. Based on this instruction, the UI section 4005 displays the screen for requesting an instruction whether to permit the user to access the surplus area on the operation unit 150. The backup application section 4003 monitors a user instruction from the screen and determines whether the instruction (selection) to permit the user to access the surplus area is input.

In step S10012, if the backup application section 4003 determines that the instruction (selection) to permit the user to access the surplus area is input (YES in step S10012), the backup application section 4003 advances the process to step S10013.

In step S10013, the backup application section 4003 notifies the backup detection section 4002 that the backup is performed in a state in which the access to the surplus area is permitted. The backup detection section 4002 notifies the memory media application section 4004 that the backup is performed in a state in which the access to the surplus area is permitted. When receiving this notification, the memory media application section 4004 sets a setting to permit the user to access the surplus area that is not used for backup in the external HDD (surplus area access permission setting) to the UI section 4005. In this case, the memory media application section 4004 manages the surplus area that is not used for backup and the backup area in the external HDD as if they were different media from each other. Based on this surplus area access permission setting, the UI section 4005 shows the surplus area that is not used for backup in the external HDD to the user as a media area and performs such control that the surplus area can be accessed from the user. However, the UI section 4005 does not show the backup area in the external HDD to the user as a media area and performs such control that the backup area cannot be accessed from the user.

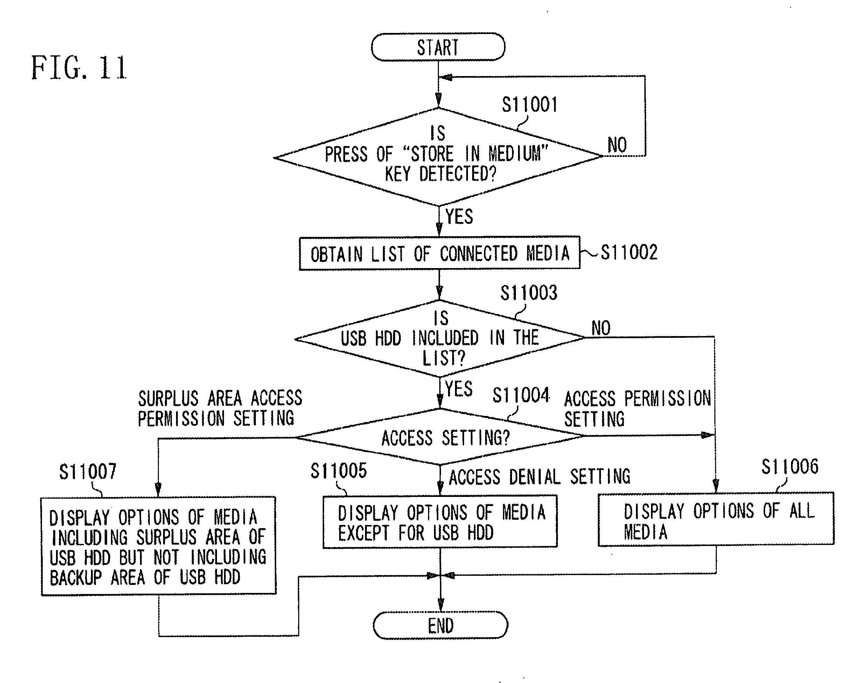

For example, when the "store in medium" key is pressed on the transmission initial screen of Fig. 6 or the box screen not illustrated in the drawings, the UI section 4005 performs such control that the backup area in the external HDD is not displayed as a destination and the surplus area in the external HDD is displayed as a destination (shown to user). Thereby, the user can select the surplus area that is not used for backup in the external HDD as the destination of the direct scan or the like, so that the surplus area can be accessed from the user. The operation of the UI section 4005 will be described in Fig. 11 below.

When the processing of step S10013 is completed, the backup application section 4003 advances the process to step S10007 and starts the backup processing.

On the other hand, in step S10012, if the backup application section 4003 determines that the instruction (selection) not to permit the user to access the surplus area is input (NO in step S10012), the backup application section 4003 advances the process to step S10007 and starts the backup processing.

In step S10011, if the backup application section 4003 determines that the capacity of the external HDD is not larger than that of the internal HDD 162 (NO in step S10011) , the backup application section 4003 advances the process to step S10007.

Steps S10007 to S10010 are the same as steps S8007 to S8010 in Fig. 8, so that the description thereof will not be repeated.

Hereinafter, the operation of the UI section 4005 when the "store in medium" key is pressed on the transmission initial screen of Fig. 6 or the box screen not illustrated in the drawings in the second embodiment of the present invention will be described with reference to Fig. 11.

Fig. 11 is a flowchart illustrating an example of the operation of the UI section 4005 when the "store in medium" key is pressed on the transmission initial screen of Fig. 6 or the box screen not illustrated in the drawings in the second embodiment of the present invention. Steps S11001 to S11007 are realized by the CPU 112 of the main controller 111 executing a program read from the ROM 114.

First, steps S11001 to S11006 are the same as steps S9001 to S9006 in Fig. 9, so that the description thereof will not be repeated.

In step S11004, if the UI section 4005 determines that the access setting to the external HDD is the "surplus area access permission setting", the UI section 4005 advances the process to step S11007. In step S11007, the UI section 4005 displays options of media obtained from the list of connected media from which the backup area in the external HDD is removed and which includes the surplus area in the external HDD. Thereby, control is performed such that the backup area in the external HDD cannot be accessed as a data storage destination and the surplus area in the external HDD can be accessed as a data storage destination. Then, the UI section 4005 ends the processing of this flowchart.

By the above processing, it is possible to prevent the user from accessing the area used for backup in the external HDD connected to back up data in the internal HDD while backup processing is performed. When the user issues an instruction indicating that the external HDD is not a backup HDD, the user can access the entire area of the external HDD. Therefore, it is possible to use efficiently (without waste) the storage resource of the external HDD connected for backup.

In the present embodiment, a configuration is described in which, if the access setting is the "surplus area access permission setting" when performing backup processing to the external HDD, the main controller 111 denies access to the backup area in the USB HDD when the direct scan or the BOX TO MEMORY is performed. However, a configuration may be employed in which, if the access setting is the "surplus area access permission setting" when performing backup processing to the external HDD, the main controller 111 denies access to the backup area in the external HDD from all processing other than the backup processing. In this case, when performing the backup processing, it is controlled to also deny the direct print to the backup area in the external HDD and the processing for storing data transmitted from the host computer 10 into the backup area in the external HDD.

The accesses that are denied when the "access denial setting" is set may be only accesses including writing to the external HDD, and accesses for reading data from the external HDD may be permitted.

Although, in the above embodiments, the internal storage device in the image forming apparatus and the external storage device (outside storage device) connected for backup are assumed to be a hard disk in the description, these storage devices may be a storage device other than a hard disk. Both or one of the internal storage device and the external storage device may be, for example, a storage device using a semiconductor (solid state drive (SSD)).

The interface for connecting the image forming apparatus with the backup storage device is not limited to USB, but may be another interface.

Further, although the present invention is described as an image forming apparatus such as a multifunction peripheral, the present invention may be an ordinary computer (information processing apparatus). For example, when the present invention is applied to a personal computer (PC), if an external storage device is connected to the PC and a user performs an operation to execute backup, the PC performs such control that an icon that indicates the external storage device is not displayed on the user interface of the PC. The PC performs such control that access to the external storage device from processing other than the backup processing is denied. Based on the above configuration, if the external storage device used for backup of an internal storage device included in the PC is connected to the PC and the backup is instructed, it is possible to prevent an issue from occurring during the backup processing by denying access to the external storage device from processing other than the backup processing.

Incidentally, the above-described configurations and contents of various pieces of data are not limited to what is described above and can be made of various configurations and contents according to the usage and purpose.

The embodiments have been hereinabove described; however, the present invention may be embodied as various forms such as a system, an apparatus, a method, a program, or a recording medium. Specifically, the present invention may be applied to a system including a plurality of devices or to an apparatus constituted by a single device.

The present invention includes configurations formed by combining the embodiments described above.

As described above, in the embodiments, it is possible to prevent processing other than the backup processing from accessing the external storage device connected for backup and prevent an issue to the backup processing of the internal storage device to the external storage device from occurring.

Aspects of the present invention can also be realized by a computer of a system or apparatus (or devices such as a CPU or MPU) that reads out and executes a program recorded on a memory device to perform the functions of the above-described embodiment (s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium).

While the present invention has been described with reference to embodiments, it is to be understood that the invention is not limited to the disclosed embodiments. The scope of the following claims is to be accorded the broadest interpretation so as to encompass all modifications, equivalent structures, and functions of the features as defined in the appended claims.

## Claims

1. An image forming apparatus (100) including a storage device (162) and a connection unit (402, 403, 404) configured to connect an external storage device (502), the image forming apparatus comprising:
detection means (400) configured to detect (S8001) that the external storage device is connected to the connection unit; and
fir,st selection means configured to select (S8004) whether to perform backup processing for copying data stored in the storage device (162) to the external storage device (502) detected by the detection means based on an instruction of a user of the image forming apparatus; and **characterized by** comprising
control means configured to perform control to deny access (S8003) to the external storage device from other user-initiated processing, different from the backup processing, that has the external storage device as a data storage destination, at least during the backup processing, if the first selection means selects to perform the backup processing, and to permit access (S8005) to the external storage device as a data storage destination from the other user-initiated processing if the first selection means selects not to perform the backup processing.

2. An image forming apparatus (100) according to claim 1, wherein the control means performs control to deny access (S8003) to the external storage device (502) from the other processing during a period from when the detection means detects that the external storage device is connected to the connection unit (402, 403, 404) to when the first selection means selects not to perform the backup processing.

3. An image forming apparatus (100) according to claim 1, further comprising:
second selection means configured to select whether to use the external storage device (502) for the other processing after the backup processing is completed based on an instruction of a user of the image forming apparatus,
wherein the control means is configured to perform control to permit access (S8010) to the external storage device from the other processing after the backup processing is completed if the second selection means selects (S8009) to use the external storage device for the other processing, and to deny access to the external storage device from other processing even after the backup processing is completed if the second selection means does not select (S8009) to use the external storage device for the other processing.

4. An image forming apparatus (100) according to any preceding claim, wherein the control means is configured to deny access (S8003) to the external storage device (502) from the other processing by performing control so as not to receive an instruction to access the external storage device by the other processing from a user interface of the image forming apparatus.

5. An image forming apparatus (100) according to claim 4, wherein the control means is configured to deny access (S8003) to the external storage device (502) from the other processing by performing control so as not to show a display for inputting an instruction to access the external storage device by the other processing on the user interface of the
image forming apparatus.

6. An image forming apparatus (100) according to any preceding claim, further comprising:
comparison means configured to compare (S10011) a capacity of the external storage device (502) with a capacity of the storage device (162) in a case that the first selection means selects to perform the backup processing; and
third selection means configured to select (S10012) whether to permit the other processing to access a surplus area other than a backup area that is used for the backup processing in the external storage device based on an instruction of a user of the image forming apparatus in a case that the comparison means determines (S10011) that the capacity of the external storage device is larger than the capacity of the storage device,
wherein the control means denies access to the backup area from the other processing and permits access to the surplus area from the other processing in a case that the third selection means selects to permit the other processing to access the surplus area.

7. An image forming apparatus (100) according to any one of claims 4 to 6, wherein the control means is configured to deny access to the external storage device (502) from the other processing by performing control so as not to receive a user instruction to specify the external storage device as a storage destination of image data.

8. An image forming apparatus (100) according to claim 7, further comprising:
reading means (200) configured to read image data from a document,
wherein the control means is configured to perform control so as not to receive a user instruction to specify the external storage device (502) as a storage destination of the image data read from the document by the reading means.

9. An image forming apparatus (100) according to claim 7, wherein the control means is configured to perform control so as not to receive a user instruction to specify the external storage device (502) as a copy destination of image data stored in the storage device.

10. An image forming apparatus (100) according to any one of claims 4 to 6, further comprising:
image output means (300) configured to print image data on a print medium as a visible image,
wherein the control means is configured to deny access to the external storage device (502) from the other processing by performing control so as not to receive a user instruction to specify the external storage device as an acquisition source of image data printed by the image output means.

11. A method for controlling an image forming apparatus (100) including a storage device (162) configured to store data and a connection unit (402, 403, 404) configured to connect an external storage device, the method comprising:
via a controller of the image forming apparatus, detecting (S8001) that the external storage device (502) is connected to the connection unit; and
via the controller of the image forming apparatus, selecting (S8004) whether to perform backup processing for copying data stored in the storage device (163) to the detected external storage device (502) based on an
of of
instruction of a user of the image forming apparatus; and **characterized by** comprising:
via the controller of the image forming apparatus, performing control to deny access (S8003) to the external storage device from other user-initiated processing, different from the backup processing, that has the external storage device as a data storage destination, at least during the backup processing, if it is selected to perform the backup processing; and
via the controller of the image forming apparatus, performing control to permit access (S8010) to the external storage device as a data storage destination from the other user-initiated processing if it is selected not to perform the backup processing.

12. A program that, when executed by an image forming
apparatus, causes the image forming apparatus to perform a method according to claim 11.

13. A computer-readable storage medium storing a program according to claim 12.

## Patentansprüche

1. Bilderzeugungsvorrichtung (100), enthaltend eine Speichereinrichtung (162) und eine zum Anschließen an eine externe Speichereinrichtung (502) konfigurierte Verbindungseinheit (402, 403, 404), wobei die Bilderzeugungsvorrichtung aufweist:
eine Nachweiseinrichtung (400), konfiguriert zum Nachweisen (S8001), dass die externe Speichereinrichtung an die Verbindungseinheit angeschlossen ist; und
eine erste Wähleinrichtung, konfiguriert zum Wählen (S8004), ob eine Sicherungsverarbeitung zum Kopieren von in der Speichereinrichtung (162) gespeicherten Daten in die von der Nachweiseinrichtung nachgewiesene externe Speichereinrichtung (502) auszuführen ist, basierend auf einem Befehl eines Nutzers der Bilderzeugungsvorrichtung, **gekennzeichnet durch**
eine Steuereinrichtung, konfiguriert zum Ausführen einer Steuerung zum Verweigern (S8003) des Zugriffs auf die externe Speichereinrichtung **durch** eine andere, von der Sicherungsverarbeitung mit der externen Speichereinrichtung als Datenspeicherziel verschiedene nutzerinitiierte Verarbeitung, zumindest während der Sicherungsverarbeitung, wenn die erste Wähleinrichtung das Ausführen der Sicherungsverarbeitung wählt, und zum Zulassen des Zugriffs (S8005) zu der externen Speichereinrichtung als Datenspeicherziel **durch** die anderen nutzerinitiierte Verarbeitung, wenn die erste Wähleinrichtung wählt, die Sicherungsverarbeitung nicht auszuführen.

2. Bilderzeugungsvorrichtung (100) nach Anspruch 1,
bei der die Steuereinrichtung eine Steuerung zum Verweigern des Zugriffs (S8003) zu der externen Speichereinrichtung (502) seitens der anderen Verarbeitung während einer Zeitspanne ausführt, die beginnt, wenn die Nachweiseinrichtung feststellt, dass die externe Speichereinrichtung an die Verbindungseinheit (402, 403, 404) angeschlossen ist, bis zu dem Zeitpunkt, zu dem die erste Wähleinrichtung wählt, die Sicherungsverarbeitung nicht auszuführen.

3. Bilderzeugungsvorrichtung (100) nach Anspruch 1,
weiterhin umfassend:
eine zweite Wähleinrichtung, konfiguriert zum Wählen, ob die Benutzung der externen Speichereinrichtung (502) für die andere Verarbeitung nach der Sicherungsverarbeitung abgeschlossen ist, basierend auf einem Befehl eines Nutzers der Bilderzeugungsvorrichtung,
wobei die Steuereinrichtung konfiguriert ist zum Ausführen einer Steuerung zum Zulassen des Zugriffs (S8010) zu der externen Speichereinrichtung seitens der anderen Verarbeitung, nachdem die Sicherungsverarbeitung abgeschlossen ist, wenn die zweite Wähleinrichtung wählt (S8009), die externe Speichereinrichtung für die andere Verarbeitung zu verwenden, und den Zugriff zu der externen Speichereinrichtung seitens der anderen Verarbeitung nach Abschluss der Sicherungsverarbeitung zu verweigern, wenn die zweite Wähleinrichtung die Verwendung der externen Speichereinrichtung für die andere Verarbeitung nicht wählt (S8009).

4. Bilderzeugungsvorrichtung (100) nach einem vorhergehenden Anspruch, bei der die Steuereinrichtung konfiguriert ist zum Verweigern des Zugriffs (S8003) zu der externen Speichereinrichtung (502) seitens der anderen Verarbeitung, indem eine derartige Steuerung ausgeführt wird, dass ein Befehl zum Zugreifen auf die externe Speichereinrichtung durch die andere Verarbeitung über eine Nutzeroberfläche der Bildverarbeitungsvorrichtung nicht empfangen wird.

5. Bilderzeugungsvorrichtung (100) nach Anspruch 4, bei der die Steuereinrichtung konfiguriert ist zum Verweigern des Zugriffs (S8003) auf die externe Speichereinrichtung (502) seitens der anderen Verarbeitung, indem eine solche Steuerung ausgeführt wird, dass eine Anzeige für die Eingabe eines Befehls zum Zugreifen auf die externe Speichereinrichtung durch die andere Verarbeitung über die Nutzerschnittstelle der Bilderzeugungsvorrichtung nicht dargestellt wird.

6. Bilderzeugungsvorrichtung (100) nach einem vorhergehenden Anspruch, weiterhin umfassend:
eine Vergleichereinrichtung, konfiguriert zum Vergleichen (S10011) einer Kapazität der externen Speichereinrichtung (502) mit einer Kapazität der Speichereinrichtung (162) für den Fall, dass die erste Wähleinrichtung das Ausführen der Sicherungsverarbeitung wählt; und
eine dritte Wähleinrichtung, konfiguriert zum Wählen (S10012), ob der anderen Verarbeitung erlaubt wird, auf einen Überschussbereich verschieden von einem für die Sicherungsverarbeitung verwendeten Sicherungsbereich in der externen Speichereinrichtung zuzugreifen, basierend auf einem Befehl eines Nutzers der Bilderzeugungsvorrichtung in dem Fall, dass die Vergleichereinrichtung feststellt (S10011), dass die Kapazität der externen Speichereinrichtung größer ist als die Kapazität der Speichereinrichtung,
wobei die Steuereinrichtung den Zugriff auf den Sicherungsbereich seitens der anderen Verarbeitung verweigert und den Zugriff auf den Überschussbereich seitens der anderen Verarbeitung für den Fall zulässt, dass die dritte Wähleinrichtung wählt, der anderen Verarbeitung den Zugriff auf den Überschussbereich zu erlauben.

7. Bilderzeugungsvorrichtung (100) nach einem der Ansprüche 4 bis 6, bei der die Steuereinrichtung konfiguriert ist zum Verweigern des Zugriffs zu der externen Speichereinrichtung (502) seitens der anderen Verarbeitung, indem eine derartige Steuerung ausgeführt wird, dass ein Nutzerbefehl zum Spezifizieren der externen Speichereinrichtung als Speicherziel für die Bilddaten nicht empfangen wird.

8. Bilderzeugungsvorrichtung (100) nach Anspruch 7, weiterhin umfassend:
eine Leseeinrichtung (200), konfiguriert zum Lesen von Bilddaten von einem Dokument,
wobei die Steuereinrichtung konfiguriert ist zum Ausführen einer solchen Steuerung, dass ein Nutzerbefehl zum Spezifizieren der externen Speichereinrichtung (502) als Speicherziel der von der Leseeinrichtung von dem Dokument gelesenen Bilddaten nicht empfangen wird.

9. Bilderzeugungsvorrichtung (100) nach Anspruch 7, bei der die Steuereinrichtung konfiguriert ist zum Ausführen einer solchen Steuerung, dass ein Nutzerbefehl zum Spezifizieren der externen Speichereinrichtung (502) als Kopie-Ziel der in der Speichereinrichtung gespeicherten Bilddaten nicht empfangen wird.

10. Bilderzeugungsvorrichtung (100) nach einem der Ansprüche 4 bis 6, weiterhin umfassend:
eine Bildausgabeeinrichtung (300), konfiguriert zum Drucken von Bilddaten auf einen Druckträger als sichtbares Bild,
wobei die Steuereinrichtung konfiguriert ist zum Verweigern des Zugriffs auf die externe Speichereinrichtung (502) seitens der anderen Verarbeitung, indem eine derartige Steuerung ausgeführt wird, dass ein Nutzerbefehl zum Spezifizieren der externen Speichereinrichtung als Erfassungsquelle der von der Bildausgabeeinrichtung zu druckenden Bilddaten nicht empfangen wird.

11. Verfahren zum Steuern einer Bilderzeugungsvorrichtung (100), die eine zum Speichern von Daten konfigurierte Speichereinrichtung (162) und eine zum Anschließen an eine externe Speichereinrichtung konfigurierte Verbindungseinheit (402, 403, 404) enthält, wobei das Verfahren umfasst:
Nachweisen (S8001) über eine Steuerung der Bilderzeugungsvorrichtung, dass die externe Speichereinrichtung (502) an die Verbindungseinheit angeschlossen ist; und
Wählen (S8004) über die Steuerung der Bilderzeugungsvorrichtung, ob eine Sicherungsverarbeitung zum Kopieren von in der Speichereinrichtung (163) gespeicherten Daten in die nachgewiesene externe Speichereinrichtung (502) auszuführen ist, basierend auf einem Befehl eines Nutzers der Bilderzeugungsvorrichtung;
**gekennzeichnet durch**:
Ausführen über die Steuerung der Bilderzeugungsvorrichtung einer derartigen Steuerung, dass der Zugriff auf die externe Speichereinrichtung durch eine andere, von der Sicherungsverarbeitung mit der externen Speichereinrichtung als Datenspeicherziel verschiedene nutzerinitiierte Verarbeitung verweigert wird, zumindest während der Sicherungsverarbeitung, wenn die Ausführung der Sicherungsverarbeitung gewählt ist; und
Ausführen über die Steuerung der Bilderzeugungsvorrichtung einer derartigen Steuerung, dass der Zugriff (S801 0) auf die externe Speichereinrichtung als Datenspeicherziel **durch** die andere nutzerinitiierte Verarbeitung zugelassen wird, wenn ausgewählt ist, die Sicherungsverarbeitung nicht auszuführen.

12. Programm, welches bei Ausführung durch eine Bilderzeugungsvorrichtung diese veranlasst, ein Verfahren nach Anspruch 11 auszuführen.

13. Computerlesbares Speichermedium, das ein Programm nach Anspruch 12
speichert.
W/Dr/So

## Revendications

1. Appareil de formation d'image (100) comprenant un dispositif de mémorisation (162) et une unité de connexion (402, 403, 404) configurée pour connecter un dispositif de mémorisation externe (502), l'appareil de formation d'image comprenant :
des moyens de détection (400) configurés pour détecter (S8001) que le dispositif de mémorisation externe est connecté à l'unité de connexion ; et
des premiers moyens de sélection configurés pour sélectionner (S8004) s'il convient d'effectuer un traitement de sauvegarde pour copier des données mémorisées dans le dispositif de mémorisation (162) vers le dispositif de mémorisation externe (502) détecté par les moyens de détection sur la base d'une instruction d'un utilisateur de l'appareil de formation d'image ; et **caractérisé en ce qu'**il comprend :
des moyens de commande configurés pour effectuer une commande pour refuser un accès (S8003) au dispositif de mémorisation externe par un autre traitement lancé par un utilisateur, différent du traitement de sauvegarde, qui a le dispositif de mémorisation externe en tant que destination de mémorisation de données, au moins pendant le traitement de sauvegarde, si les premiers moyens de sélection sélectionnent d'effectuer le traitement de sauvegarde, et pour permettre l'accès (S8005) au dispositif de mémorisation externe en tant que destination de mémorisation de données par l'autre traitement lancé par un utilisateur si les premiers moyens de sélection sélectionnent de ne pas effectuer le traitement de sauvegarde.

2. Appareil de formation d'image (100) selon la revendication 1, dans lequel les moyens de commande effectuent une commande pour refuser l'accès (S8003) au dispositif de mémorisation externe (502) par l'autre traitement pendant une période à partir de l'instant auquel les moyens de détection détectent que le dispositif de mémorisation externe est connecté à l'unité de connexion (402, 403, 404) jusqu'à l'instant auquel les premiers moyens de sélection sélectionnent de ne pas effectuer le traitement de sauvegarde.

3. Appareil de formation d'image (100) selon la revendication 1, comprenant en outre :
des deuxièmes moyens de sélection configurés pour sélectionner s'il convient ou non d'utiliser le dispositif de mémorisation externe (502) pour l'autre traitement à la fin du traitement de sauvegarde sur la base d'une instruction d'un utilisateur de l'appareil de formation d'image,
dans lequel les moyens de commande sont configurés pour effectuer une commande pour permettre l'accès (S8010) au dispositif de mémorisation externe par l'autre traitement à la fin du traitement de sauvegarde si les deuxièmes moyens de sélection sélectionnent (S8009) d'utiliser le dispositif de mémorisation externe pour l'autre traitement, et pour refuser l'accès au dispositif de mémorisation externe par l'autre traitement même à la fin du traitement de sauvegarde si les deuxièmes moyens de sélection ne sélectionnent pas (S8009) d'utiliser le dispositif de mémorisation externe pour l'autre traitement.

4. Appareil de formation d'image (100) selon l'une quelconque des revendications précédentes, dans lequel les moyens de commande sont configurés pour refuser l'accès (S8003) au dispositif de mémorisation externe (502) par l'autre traitement en effectuant une commande de manière à ne pas recevoir une instruction pour accéder au dispositif de mémorisation externe par l'autre traitement à partir d'une interface utilisateur de l'appareil de formation d'image.

5. Appareil de formation d'image (100) selon la revendication 4, dans lequel les moyens de commande sont configurés pour refuser l'accès (S8003) au dispositif de mémorisation externe (502) par l'autre traitement en effectuant une commande de manière à ne pas montrer un affichage pour entrer une instruction pour accéder au dispositif de mémorisation externe par l'autre traitement sur l'interface utilisateur de l'appareil de formation d'image.

6. Appareil de formation d'image (100) selon l'une quelconque des revendications précédentes, comprenant en outre :
des moyens de comparaison configurés pour comparer (S10011) une capacité du dispositif de mémorisation externe (502) avec une capacité du dispositif de mémorisation (162) dans un cas dans lequel les premiers moyens de sélection sélectionnent d'effectuer le traitement de sauvegarde ; et
des troisièmes moyens de sélection configurés pour sélectionner (S10012) s'il convient de permettre à l'autre traitement d'accéder à une zone en surplus autre qu'une zone de sauvegarde qui est utilisée pour le traitement de sauvegarde dans le dispositif de mémorisation externe sur la base d'une instruction d'un utilisateur de l'appareil de formation d'image dans un cas dans lequel les moyens de comparaison déterminent (S10011) que la capacité du dispositif de mémorisation externe est supérieure à la capacité du dispositif de mémorisation,
dans lequel les moyens de commande refusent l'accès à la zone de sauvegarde par l'autre traitement et permettent l'accès à la zone en surplus par l'autre traitement dans un cas dans lequel les troisièmes moyens de sélection sélectionnent de permettre à l'autre traitement d'accéder à la zone en surplus.

7. Appareil de formation d'image (100) selon l'une quelconque des revendications 4 à 6, dans lequel les moyens de commande sont configurés pour refuser l'accès au dispositif de mémorisation externe (502) par l'autre traitement en effectuant une commande de manière à ne pas recevoir une instruction d'utilisateur pour spécifier le dispositif de mémorisation externe en tant que destination de mémorisation des données d'image.

8. Appareil de formation d'image (100) selon la revendication 7, comprenant en outre :
des moyens de lecture (200) configurés pour lire des données d'image dans un document,
dans lequel les moyens de commande sont configurés pour effectuer une commande de manière à ne pas recevoir une instruction d'utilisateur pour spécifier le dispositif de mémorisation externe (502) en tant que destination de mémorisation des données d'image lues dans le document par les moyens de lecture.

9. Appareil de formation d'image (100) selon la revendication 7, dans lequel les moyens de commande sont configurés pour effectuer une commande de manière à ne pas recevoir une instruction d'utilisateur pour spécifier le dispositif de mémorisation externe (502) en tant que destination de copie des données d'image mémorisées dans le dispositif de mémorisation.

10. Appareil de formation d'image (100) selon l'une quelconque des revendications 4 à 6, comprenant en outre :
des moyens de sortie d'image (300) configurés pour imprimer des données d'image sur un support d'impression en tant qu'image visible,
dans lequel les moyens de commande sont configurés pour refuser l'accès au dispositif de mémorisation externe (502) par l'autre traitement en effectuant une commande de manière à ne pas recevoir une instruction d'utilisateur pour spécifier le dispositif de mémorisation externe en tant que source d'acquisition des données d'image imprimées par les moyens de sortie d'image.

11. Procédé pour commander un appareil de formation d'image (100) comprenant un dispositif de mémorisation (162) configuré pour mémoriser des données et une unité de connexion (402, 403, 404) configurée pour connecter un dispositif de mémorisation externe, le procédé comprenant :
par l'intermédiaire d'un contrôleur de l'appareil de formation d'image, la détection (S8001) que le dispositif de mémorisation externe (502) est connecté à l'unité de connexion ; et
par l'intermédiaire du contrôleur de l'appareil de formation d'image, la sélection (S8004) s'il convient d'effectuer un traitement de sauvegarde pour copier des données mémorisées dans le dispositif de mémorisation (163) vers le dispositif de mémorisation externe (502) détecté sur la base d'une instruction d'un utilisateur de l'appareil de formation d'image ; et **caractérisé en ce qu'**il comprend :
par l'intermédiaire du contrôleur de l'appareil de formation d'image, l'exécution d'une commande pour refuser l'accès (S8003) au dispositif de mémorisation externe par un autre traitement lancé par un utilisateur, différent du traitement de sauvegarde, qui a le dispositif de mémorisation externe en tant que destination de mémorisation de données, au moins pendant le traitement de sauvegarde, s'il est sélectionné d'effectuer le traitement de sauvegarde ; et
par l'intermédiaire du contrôleur de l'appareil de formation d'image, l'exécution d'une commande pour permettre l'accès (S8010) au dispositif de mémorisation externe en tant que destination de mémorisation de données par l'autre traitement lancé par un utilisateur s'il est sélectionné de ne pas effectuer le traitement de sauvegarde.

12. Programme qui, lorsqu'il est exécuté par un appareil de formation d'image, amène l'appareil de formation d'image à effectuer un procédé selon la revendication 11.

13. Support de mémorisation pouvant être lu par un ordinateur mémorisant un programme selon la revendication 12.
